# EUROPEAN PATENT SPECIFICATION

(11) **EP 2 207 234 B1**
(45) Date of publication and mention of the grant of the patent: **18.04.2012**
(21) Application number: 09180129.0
(22) Date of filing: 21.12.2009
(51) Int. Cl.: H01M 10/0567, H01M 10/0568, H01M 10/0525, C01B 35/12, C04B 35/553

(54) **Non-aqueous electrolyte**
Nicht-wässriger Elektrolyt
Électrolyte non-aqueux

(30) Priority: 26.12.2008 JP 2008335160
(43) Date of publication of application: 14.07.2010
(73) Proprietor: AIR PRODUCTS AND CHEMICALS, INC., Allentown, PA 18195-1501 (US)
(72) Inventor: Arai, Juichi, Tsuchiura-shi Ibaraki 300-0034 (JP); Matsuo, Akira, Azumino City Nagano 399-8303 (JP)
(74) Representative: Westendorp | Sommer

(56) References cited:
- EP-A1- 1 304 758
- EP-A1- 1 679 760
- EP-A2- 1 513 215
- EP-A2- 1 763 099
- US-A1- 2007 072 086
- US-B1- 6 927 001

## Description

FIELD OF THE INVENTION

The present invention relates to a nonaqueous electrolyte. The nonaqueous electrolyte of the present invention can be used most appropriately in a lithium secondary cell.

BACKGROUND OF THE INVENTION

Primary cells and secondary cells contain one or multiple electrochemical cells. Many cells contain lithium because of the high reduction potential of lithium, low molecular weight of elemental lithium, and high output density. The small size and high mobility of lithium cations make possible rapid recharging in secondary cells. These advantages make lithium secondary cells ideal for portable telephones, laptop computers, and other such portable electronic devices. Larger lithium cells are also being developed recently for use in the hybrid electric automobile market.

Lithium secondary cells are superior to existing primary and secondary cell technology because of the high reduction potential and low molecular weight of elemental lithium and dramatically improve the output density. A lithium secondary cell is a cell that contains metallic lithium as the cathode. There are also cells that contain a lithium ion host material as the cathode known as lithium ion cells. A secondary cell is a cell intended to undergo multiple cycles of charging and discharging. The small size and high mobility of the lithium cation enables rapid recharging. These advantages make lithium secondary cells ideal for portable telephones, laptop computers, and other such portable electronic devices. Larger lithium ion cells are also recently being developed and are intended for use in the hybrid car market.

The main problem encountered in the reversibility of cell charging and discharging was the reactivity of these to the electrolyte components (salts and solvents) under varying conditions. It was observed in the past that all of the electrolyte salts and solvents are reduced to some extent at the cathode during the initial charging step. This reduction forms a conductive inactivated layer or a film called a solid electrolyte interphase, that is, SEI, layer. Reduction, however, continues with the charging/discharging cycle, and the reversible capacity at the cathode can finally be lost.

A particular problem in the above-mentioned use in hybrid electric automobiles has been making the life of the lithium ion cell as long as possible. Suppressing "undesirable" reactions in the cell was important to this end.

As was mentioned above, the life tended to shorten with repeated charging/discharging cycles in conventional lithium ion cells.

Examples of conventional batteries are described in US Patent No 2007/0048605 A1 corresponding to JP 2007-87938) and JP 2006-202745.

EP 1763099 (A2) discloses an electrochemical device comprising an anode, a cathode and an electrolyte comprising at least one solvent and at least one anion of a salt comprising at least one member selected from the group consisting of:
i) (B₁₂FₓZ₁₂₋ₓ)²⁻ wherein Z comprises at least one of H, Cl, Br or OR; R comprises at least one of H, alkyl or fluoroalkyl, or at least one polymer and x is at least 3 on an average basis but not more than 12;
ii) ((R'R"R"')NB₁₂FₓZ₍₁₁₋ₓ₎)⁻, wherein N is bonded to B and each of R', R", R"' comprise a member independently selected from the group consisting of hydrogen, alkyl, cycloalkyl, aryl and a polymer; Z comprises H, Cl, Br, or OR, where R comprises H, alkyl or perfluoroalkyl or a polymer, and x is an integer from 0 to 11; and
iii) (R""CB11FxZ₍₁₁₋ₓ₎)⁻, wherein R"" is bonded to C and comprises a member selected from the group consisting of hydrogen, alkyl, cycloalkyl, aryl, and a polymer, Z comprises H, Cl, Br, or OR, wherein R comprises H, alkyl or perfluoroalkyl or a polymer, and x is an integer from 0 to 11.

EP 1679760 (A1) discloses an electrolyte having a second cycle reduction current at 0.3 V vs Li/Li⁺ that is less than the reduction current of the first cycle, said electrolyte comprising a salt which will not electrochemically passivate.

EP 1513215 (A2) discloses a battery comprising: a lithium salt of the formula:
Li₂B₁₂FₓZ₁₂₋ₓ where x averages at least 4 but not more than 12 and Z is H, Cl, or Br, wherein the lithium salt is e.g. Li₂B₁₂F₁₁H.

US 2007072086 (A1) discloses a nonaqueous electrolyte cell comprising a positive electrode and a negative electrode, and produced by using a nonaqueous electrolyte including at least one kind of a cyclic carbonate having a carbon-carbon [pi] bond and at least one kind of a cyclic organic compound having an S-O bond, characterized in that said positive electrode is constituted of a positive-electrode active material including a main component which is a fired oxide having a layered rock salt type crystal structure represented by Liₘ[Ni_{b}M_{(1-b)}O₂] (M is one or more kinds of elements included in 1 to 16 groups excluding Ni, Li, and O; and 0<=m<=1.1), and in which the value of b is 0<b<1.

US 6927001 (B1) discloses a non-aqueous electrolytic solution comprising at least two organic compounds dissolved in a solvent comprising a cyclic carbonate and a chain carbonate, in an amount of 0.1 to 4 weight % for each compound, in which both of said two organic compounds have a reduction potential higher than reduction potentials of the cyclic and chain carbonates, in which one of the organic compounds has a reduction potential equal to a reduction potential of another organic compound or has a reduction potential lower or higher than a reduction potential of another organic compound by a potential of less than 0.4 V, and in which the former organic compound is vinylene carbonate and the latter organic compound is selected from the group consisting of a sultone compound, a sulfonate compound, phenylecetylene, and methyl propargyl carbonate.

EP 1304758 (A1) discloses a non-aqueous electrolyte characterized in that said electrolyte comprising a non-aqueous solvent and a solute dissolved in said non-aqueous solvent, and that said electrolyte containing propylene carbonate and 1,3-propanesultone as additives, respectively.

The object of the present invention is to resolve the above-mentioned drawbacks of the prior art and to provide a nonaqueous electrolyte that makes it possible to lengthen the life of a lithium ion cell when used in a lithium ion cell even when subjected to repeated charging/discharging cycles.

Another object of the present invention is to provide a lithium ion cell that can achieve a longer life even when subjected to repeated charging/discharging cycles.

### BRIEF SUMMARY OF THE INVENTION

As a result of in-depth research, the present inventors discovered that combining two types of additives having specific structures with a lithium salt having a specific structure is very effective for attaining the above goals.

The nonaqueous electrolyte of the present invention is based on the above knowledge. More specifically, it is characterized by containing a nonaqueous solvent,
a lithium salt shown by the following formula (1)

Li₂B₁₂H₂F₁₂₋ₓ (1)

(where, x is an integer of from 0 to 3),
at least one first additive selected from compounds shown by the following formula (2)
(where, X and Y are independently H, CH₃, a vinyl group, or F),
or vinyl ethylene carbonate (VEC) or fluorinated ethylene carbonate
and at least one second additive among compounds shown by the following formula (3) 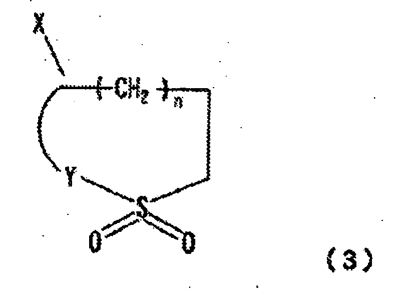 (where, Y is O, X is H or OH, and n is an integer of 0-5).

As was mentioned above, the present invention provides a nonaqueous electrolyte that makes it possible to lengthen the life of a lithium ion cell when used in a lithium ion cell even when subjected to repeated charging/discharging cycles.

The present invention also provides a lithium ion cell that makes it possible to actualize longer life even when subjected to repeated charging/discharging cycles.

The present invention also provides a lithium ion cell capable of maintaining higher discharge capacity even when subjected to repeated charging/discharging cycles.

### BRIEF DESCRIPTION OF SEVERAL VIEWS OF THE DRAWINGS

Figure 1 is a schematic oblique view showing an example of the construction of a lithium ion cell of the present invention.

Figure 2 is a graph showing the measurement results obtained in the working example.

Figure 3 is a graph showing the measurement results obtained in the working example.

Figure 4 is a graph showing the measurement results obtained in the working example.

Figure 5 is a schematic cross-sectional view showing an example of the construction of a lithium ion cell of the present invention.

Figure 6 is a graph showing the IR profile obtained in Production Example 5.

### DETAILED DESCRIPTION OF THE INVENTION

The present invention will be explained more concretely below, referring to the drawings as needed. The terms "parts" and "%" that express the ratios below are based on weight unless specifically stated otherwise (however, solvent compositions are based on "volume" unless specifically stated otherwise).

### (Electrolyte)

The electrolyte of the present invention contains at least a nonaqueous solvent, a lithium salt having a specific structure, and two types of additives having specific structures.

### (Lithium salt)

As lithium salts that can be used in the present invention, examples of the lithium salt that constitutes the electrolyte salt of the present invention are lithium fluoroborates shown by the following formula (1)

Li₂B₁₂H₂F₁₂₋ₓ (1)

(where, x is an integer of from 0 to 3)

### (Examples of preferred lithium salts)

More specifically, compounds in which x = 0 are preferred among compounds shown by the above formula (1) for their high oxidation resistance (that is, long life).

### (First additive)

The first additive in the present invention is at least one additive among : compounds shown by the following formula (2): 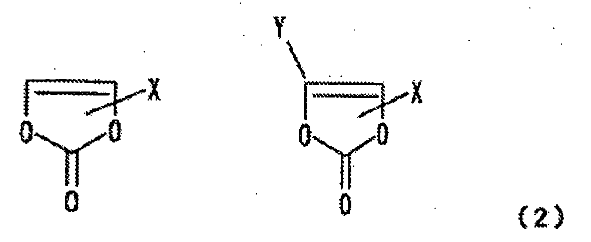 (where, X and Y are independently H, CH₃, a vinyl group, or F), vinyl ethylene carbonate (VEC) and fluorinated ethylene carbonate (FEC).

### (Suitable first additives)

The following compounds among the above-mentioned first additives are especially suitable for use from the standpoint of cell performance.

For example, at least one additive selected from vinylene carbonate (VC), vinyl ethylene carbonate (VEC), dimethyl vinylene carbonate (DMVC), and fluorinated ethylene carbonate (FEC).

VC among these is especially preferred from the standpoint of not raising the internal resistance.

### (Second additive)

The second additive in the present invention is at least one additive among compounds shown by the following formula (3): 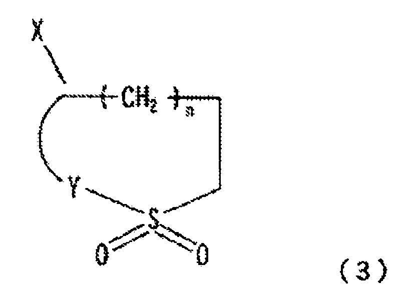 (where, Y is O, X is H or OH, and n is an integer of 0-5).

### (Suitable second additives)

The following compounds among the above-mentioned second additives are especially suitable for use from the standpoint of their stability at high temperature.

For example, at least one additive selected from propane sultone (PS) and hydroxypropane sultone (HOPS).

PS among them is especially preferred for its good ability to suppress gas production.

### (Suitable combinations of first and second additives)

The following can be given as examples of suitable combinations of first and second additives in the present invention from the standpoint of the balance of cell performance and life.

| <First additive> | <Second additive> |
|---|---|
| Vinylene carbonate (VC) | Propane sultone (PS) |
| Fluorinated ethylene carbonate (FEC) | PS |
| (VC + vinyl ethylene carbonate (VEC)) | PS |

### (Suitable combinations of lithium salt, first and second additives)

The following can be given as examples of suitable combinations of lithium salt, first and second additives in the present invention from the standpoint of the balance of cell performance and life.

| <Lithium salt> | <First additive> | <Second additive> |
|---|---|---|
| Li₂B₁₂F₁₂ | VC | PS |
| Li₂B₁₂F₁₂ | VC | Hydroxypropane sultone (HOPS) |
| Li₂B₁₂F₁₂ | (VC + VEC) | PS |
| Li₂B₁₂F₁₂ | VC | (PS + HOPS) |

### (Nonaqueous solvent)

The nonaqueous solvent (also sometimes referred to as the "carrier") that can be used in the present invention is not particularly restricted.

### (Concrete examples of the nonaqueous solvent)

Examples of the aprotic solvent or carrier that forms the electrolyte include at least one member selected from the group consisting of ethylene carbonate (EC), propylene carbonate (PC), dimethyl carbonate (DMC), ethyl methyl carbonate (EMC), diethyl carbonate (DEC), methyl propyl carbonate (MPC), ethyl propyl carbonate (EPC), dipropyl carbonate (DPC), bis(trifluoroethyl)carbonate, bis(pentafluoropropyl)carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, and the like, fluorinated oligomers, dimethoxyethane, triglyme, tetraethylene glycol, dimethyl ether (DME), polyethylene glycol, sulfone, and γ-butyrolactone (GBL). The solvent or carrier may contain at least one type of ionic liquid. The term ionic liquid also refers to any type of room-temperature molten salt [sic]. Examples of suitable ionic liquids include in particular at least one member selected from asymmetrical tetraalkyl ammonium salts of weakly coordinated anions that do not contain active hydrogen or reducible hydrogen in the liquid cation, for example, butyl trimethylammonium tetrafluoroborate, hexyl trimethylammonium trifluoromethanesulfonimide, and the like, and N-alkyl piperidium [sic; piperidinium] salts of weakly coordinated anions, for example, N-methylpiperidinium tetrafluoroborate, N-ethylpiperidinium trifluoromethanesulfonate, and N-butylpiperidinium trifluoromethanesulfonimide.

### (Suitable combinations of lithium salt, first and second additives)

The following can be given as examples of suitable combinations of nonaqueous solvent, lithium salt, first and second additives in the present invention from the standpoint of the balance of cell performance and life (the composition ratios are volume ratios (parts)).
(1) EC/PC = 30/5 and DMC/EMC/DEC = 65/10/40
(2) EC/PC = 30/10 and DMC/GBC = 40/20
   or EC/PC = 30/10 and EMC/GBC = 40/20
   or EC/PC = 30/10 and DEC/GBC = 40/20
(3) PC/EC = (5-20)/(20-4) and (DMC or EMC or DEC)/GBC = (20-65)/(5-25)

### (Suitable cell life)

Taking the capacity after 100 charge/discharge cycles as Cap (100) and the capacity after 200 charge/discharge cycles as Cap (200), the ratio thereof R (Cap) = Cap (200)/Cap (100) of a lithium ion cell that employs the nonaqueous electrolyte of the present invention is preferably or more. This ratio R (Cap) is more preferably [blank space] or more (ideally [blank space] or more).

### (Interpolation of cell life)

The values of the above-mentioned Cap (100) and/or Cap (200) can be determined by "interpolation" by the following formula from the capacity after the before and after charge/discharge cycles (for example, the capacity of (100 - a) times and (100 + b) times; (200 - c) times and (200 + d) times [translator's note: no closing parenthesis].

### (Measurement of capacity)

The values of the above-mentioned Cap (100) and Cap (200) can be measured appropriately by using the conditions discussed below in Working Example 1.

### (Other examples)

In another embodiment, the electrolyte of the present invention may include an aprotic gel polymer carrier/solvent. A suitable gel polymer carrier/solvent may include at least one member selected from the group consisting in particular of polyethers, polyethylene oxides, polyimides, polyphosphazines, polyacrylonitriles, polysiloxanes, polyether grafted polysiloxanes, derivatives of the above, copolymers of the above, crosslinked and network structures of the above, and blends of the above. A suitable ionic electrolyte salt is added. Other gel polymer carriers/solvents may include those prepared from a polymer matrix derived from at least one member selected from the group consisting of polypropylene oxides, polysiloxanes, sulfonated polyimides, perfluorinated membranes (Nafion™ resins), divinyl polyethylene glycols, polyethylene glycol-bis(methylacrylates), polyethylene glycol-bis(methyl methacrylates), derivatives of the above, copolymers of the above, and crosslinked and network structures of the above. The aprotic gel polymer carrier may contain any of the aprotic liquid carriers listed above.

When the electrolyte contains an electrolyte in a solution [sic], the salt concentration is typically from about 0.05 to about 2 mol, or from about 0.1 to about 1.2 mol or from about 0.2 to about 0.5 mol. The viscosity tends to become overly high when the concentration is raised, and the bulk conductivity characteristics of the cell that utilizes the electrolyte are sometimes negatively affected.

### (Cathode/anode)

The cell of the present invention contains a cathode, anode, and the electrolyte of the present invention. In certain embodiments, the anode and cathode of the cell may be any type of lithium-containing substance being utilized or a substance such as lithium and the like that can "host" an ion in reduced form or oxidized form. The term "host" means a substance capable of reversibly segregating an ion, for example, a lithium ion. The cathode of the cell of the present invention may include at least one member selected from the group consisting of metallic lithium, a carbonaceous substance, for example, amorphous carbon or graphite (natural or manmade), tin and alloys thereof, silicon and alloys thereof, germanium and alloys thereof, metal oxides, and derivatives of these substances (for example, lithium titanate).

The anode used in the cell of the present invention in particular may be based on a lithium composite oxide that combines cobalt, nickel, manganese, a mixture of these, or other such transition metals or a lithium composite oxide in which some of the lithium sites or transition metal sites are substituted by at least one member selected from the group consisting of cobalt, nickel, manganese, aluminum boron, magnesium, iron, copper, and the like. Examples of such lithium composite oxides include compounds having the formula LiMOₓ (where, M is a metal; M = Cu, Mn, Ni...Mn + Ni, and the like). Other examples include what are called "olivine type" phosphate compounds having a formula LiMPO₄ (where, M is a metal; M = Fe, Mn, Co, Ni... and the like).

Concrete examples of the lithium composite used as the anode include lithium iron phosphates, LiFePO₄, LiNi₁₋ₓCOₓO₂, and lithium manganese spinel, LiMn₂O₄.

### (Separator)

The separator of the lithium cell in the present invention may include a microporous polymer film. Examples of the polymer that forms the film in particular include at least one member selected from the group consisting of nylon, cellulose, nitrocellulose, polysulfone, polyacrylonitrile, polyvinylidene fluoride, polypropylene, polyethylene, polybutene, and mixtures thereof. A ceramic separator, particularly one based on a silicate, aluminosilicate, and derivatives of these, can also be used. The electrolyte wetting of the separator can be improved by adding a surfactant to the separator or electrolyte. Other components or compounds known to be used in electrolytes or cells may also be added.

In certain embodiments, the cell is constructed from a carbonaceous lithium ion-hosting cathode, anode, separator, and a lithium-based electrolyte salt carried in an aprotic solvent, gel polymer, or polymer matrix. Examples of the carbonaceous cathode are graphite and hard carbon.

Various embodiments of the present invention are explained in the examples below; these in no way limit the scope of the claims attached to this application.

The present invention is explained more concretely below through working examples.

### Production Example 1

### [Preparation of Li₂B₁₂HₓF₁₂₋ₓ (x = 0-3)]

A colorless slurry containing 2.96 g (11.8 mmol) of K₂B₁₂H₁₂CH₃OH in 6 mL of formic acid at an average Hammett acidity of H₀ = -2 to -4 was fluorinated at 0-20°C. 100% of the desired F₂ (142 mmol) was added as a mixed gas of 10% F₂/10% O₂/80% N₂, and a colorless solution remained. A solid precipitated from the solution through further fluorination (3%) at 30°C. A quantity of 5.1 g of a colorless, brittle solid was obtained by evacuating the solvent overnight. This crude product was analyzed by ¹⁹F NMR and was found to be mainly B₁₂F₁₀H₂²⁻ (60%), B₁₂F₁₁H²⁻ (35%), and B₁₂F₁₂²⁻ (5%). The crude product was dissolved in water, and the pH of the solution was adjusted to 4-6 using triethylamine and triethylamine hydrochloride. The precipitated product was filtered out, dried, and again suspended in water. Two equivalents of lithium hydroxide monohydrate was added to this slurry, and the resulting triethylamine was evacuated. After distilling off all of the triethylamine, more lithium hydroxide was added, and the pH of the final solution was brought to 9-10. The water was removed by distillation, and the final product was vacuum dried for 4-8 hours at 200°C. The typical yield of Li₂B₁₂FₓH₁₂₋ₓ (x = 10, 11, 12) was about 75%.

### Production Example 2

### [Preparation of Li₂B₁₂FₓH₁₂₋ₓ (x = 10-12)]

A colorless slurry containing 2.96 g (11.8 mmol) K₂ B₁₂ H₁₂ CH₃OH in 6 mL formic acid at an average Hammett acidity of H₀ = -2 to -4 was fluorinated at 0 to 20°C. 100% of the desired F₂ (142 mmol) was added as a mixture of 10% F₂/10% O₂/80% N₂, and a colorless solution remained. A solid precipitated from the solution through further fluorination (3%) at 30°C. A quantity of 5.1 g of a colorless, brittle solid was obtained by evacuating the solvent overnight. This crude product was analyzed by ¹⁹F NMR and was found to be mainly B₁₂F₁₀H₂²⁻(60%), B₁₂F₁₁H²⁻(35%), and B₁₂ F₁₂²⁻(5%). The crude product was dissolved in water, and the pH of the solution adjusted to 4-6 using triethylamine and triethylamine hydrochloride. The precipitated product was filtered, dried, and again suspended in water. Two equivalents of lithium hydroxide monohydrate was added to this slurry, and the resulting triethylamine was evacuated. After distilling off all of the triethylamine, more lithium hydroxide was added, and the pH of the final solution was brought to 9-10. The water was removed by distillation, and the final product was vacuum dried for 4-8 hours at 200°C. The typical yield of Li₂ B₁₂Fₓ H₁₂₋ₓ (x = 10,11,12) was about 75%.

### Production Example 3

### [Preparation of Li₂B₁₂FₓBr₁₂₋ₓ (x ≥ 10, average x = 11)]

A quantity of 3 g (0.008 mol) of Li₂B₁₂FₓH₁₂₋ₓ (x ≥ 10) of an average composition of Li₂B₁₂F₁₁H was dissolved in 160 mL of 1 M HCl (aq). A quantity of 1.4 mL (0.027 mol) of Br₂ was added, and this mixture was refluxed for four hours at 100°C. A sample was taken for NMR analysis.

Part of the above sample was returned to reflux, and chlorine was added over six hours to form a stronger brominating agent BrCl. An aliquot as taken when chlorine addition was completed, and NMR analysis showed the composition of this aliquot to be the same as that of the starting aliquot. The HCl and water were distilled off, and the product was vacuum dried at 150°C. A total of 2.55 g of a white, solid product was isolated. The theoretical amount of Li₂B₁₂FₓBr₁₂₋ₓ (x ≥ 10, average x = 11) was 3.66 g.

### Production Example 4

### [Refining of Li₂B₁₂F₁₂ from sodium and potassium] [sic]

An aqueous solution of Li₂B₁₂F₁₂ containing approximately 200 ppm of sodium was eluted through column having an Li⁺ form cation exchange resin DOWEX 50WX8-200. The water was distilled off from the eluate, and the residue was vacuum dried at 150°C. The refined salt Li₂B₁₂F₁₂ contained about 60 ppm of sodium when measured by ICP.

### Production Example 5

### [Thermogravimetric analysis (TGA)/IR of Li₂B₁₂F₁₂]

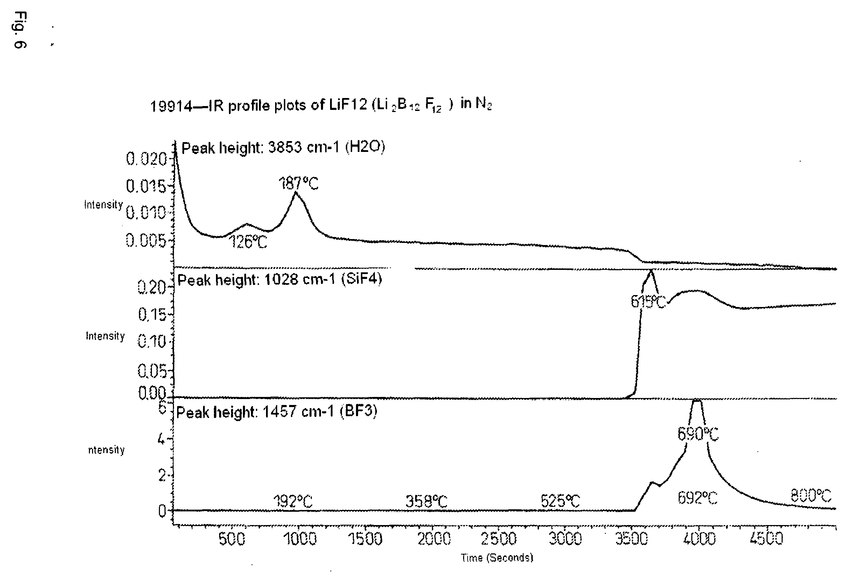

TGA/IR analysis was performed by ramping the sample in TA 2960 SDT and heating from room temperature to 800°C at 10°C/min in 100 cc/min of N₂, H₂O, saturated N₂, or air. The gas released was passed through a 10 cm IR gas cell. The IR spectrum was collected at a resolution of 4 cm⁻¹ and a gain of 1 by AVATAR IR. The spectrum was collected as a series of spectra at 1-minute intervals. The profile of the released gas was created by measuring the absorbance related to various compounds at the band maximum in the IR spectrum. Quantitative information was derived by multiplying the area under the profile curve by the calibration factor and dividing by the sample weight. The IR profile shown in Figure 6 shows that the majority of the water is removed from the sample by N₂ purging at about 190°C and more is removed at 225°C. The final removal of water at 180°C or lower appears to progress relatively slowly.

### Production Example 6

### [Vacuum drying of Li₂B₁₂FₓZ₁₂₋ₓ salt]

Approximately 200 g of Li₂B₁₂F₁₂ salt prepared according to Production Example 2 was ground and dried for 8 hours at 250°C under a 3.999 Pa (30 mTorr) dynamic vacuum. The sample was transferred to a drying box having an argon-filled inert atmosphere. Moisture analysis of this salt was carried out by an Orion AF7 coulometric Karl Fischer titrator. Hydranal^{™} Karl Fischer reagent and standards made by Riedel-deHaen were used. Approximately 0.60 g of Li₂B₁₂F₁₂ was dissolved in 3 mL of acetonitrile, and from 3 to 1 mL was taken for water analysis. After this drying procedure, a water value of about 100 ppm was obtained on a salt weight basis. Vacuum drying in this method typically gave water readings of 100-500 ppm.

### Production Example 7

### [Drying of Li₂B₁₂FₓZ₁₂₋ₓ by fluidized bed]

Approximately 100 g of Li₂B₁₂F₁₂ salt prepared according to Production Example 2 was ground and dried for four hours at 150-200°C under a 13.332 Pa (100 mTorr) dynamic vacuum. The sample was further ground and loaded onto a quartz frit in a vertical glass tube. This tube was externally heated to 260°C, and dry nitrogen was purged through the salt at a rate sufficient to fluidize the salt bed. After 12 hours, the sample was cooled and transferred to a box having an argon-filled inert atmosphere for analysis of the water content. Karl Fischer analysis, performed in the same way as in Example 7, showed the salt to contain 10-20 ppm of water on a salt weight basis.

### Working Example 1

### (Lithium salt)

Li₂B₁₂F₁₂ (purity 99.5% or more), a lithium salt, was stored in an argon glove box kept at a dew point of -80°C or lower and supplied for preparation of the electrolyte after fluorinating the raw material according to Production Example 2, removing the impurities, and drying.

The purity of the Li₂B₁₂F₁₂ obtained assessed by liquid chromatography (LC) was 99.5%. The water content assessed by the Karl Fischer (KF) method was 20 ppm. The solvent used in the electrolyte was refined to a water content of 10 ppm or less.

### (Electrolyte)

A quantity of 14.96 g of Li₂B₁₂F₁₂ salt was weighed out as the electrolyte 1 of Working Example 1, and 100 mL of solution was prepared by dissolving the electrolyte in a mixed solvent of PC:EC:DEC = 5:30:65 vol% (where, PC: propylene carbonate, EC: ethylene carbonate, DEC: diethyl carbonate) that contained 2 wt% vinylene carbonate (VC) and 1 wt% propane sultone (PS) to prepare an electrolyte 1 of 0.4 mol/L of Li₂B₁₂F₁₂ salt.

The conductivity of this electrolyte 1 measured at 1 kHz was 4.75 mS/cm, and the viscosity was 6.8 cP.

### (Laminated cell)

Next, a laminated cell was prepared by the following procedure to assess the cell characteristics. First, a mixture of 80 wt% LiMn₂O₄ and 20 wt% LiNi_{0.8}Co_{0.18}Al_{0.02}O₂ was taken as the anode active substance A, and an anode paste was prepared by dissolving this and a mixture B of 10 wt% acetylene black and 90 wt% graphite as a conductive material and polyvinylidene fluoride C as a binder in N-mertipyrrolidone [sic] (NMP) to make a dry weight ratio of A:B:C = 85:8:7 wt%. The paste was applied to an anode current collector 1 made of aluminum foil, dried, and pressed to prepare an anode electrode having a anode layer 2 formed on both surfaces of the anode current collector 1. A cathode paste was prepared by dissolving manmade graphite D and C in NMP to make D:C = 92:8 wt% by dry weight. The paste was applied to a cathode current collector 3 made of copper foil, dried, and pressed to prepare a cathode electrode having a cathode layer 4 formed on both surfaces of the cathode current collector 3.

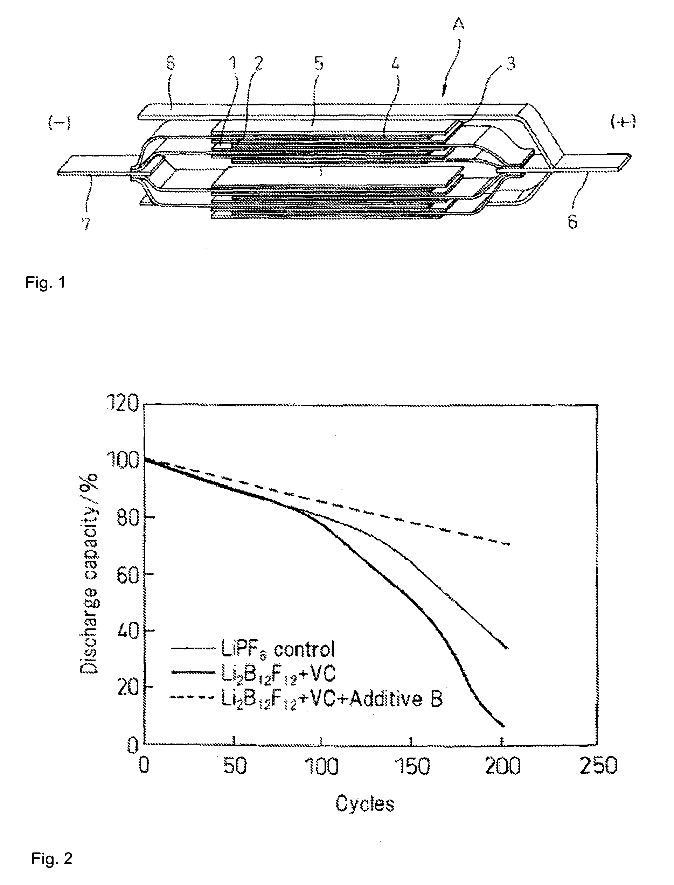

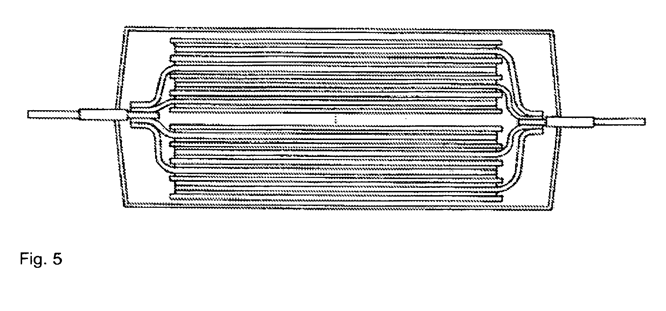

Sixteen cathodes and 15 anodes were alternately laminated via separators 5 with the tab terminal parts of the electrodes prepared facing the opposite directions. An anode terminal 6 made of aluminum for the anodes and a cathode terminal 7 made of nickel for the cathodes were connected by ultrasonic welding to the tab terminals of the anodes and cathodes. [The construct was] inserted in a casing made of an aluminum laminate sheet, and the base and edges of the anode and cathode terminals were sealed by heat sealing. The electrolyte 1 prepared above was introduced from the top. After vacuum degassing, the top was temporarily sealed by heat sealing, and a laminated cell A having a planned capacity of about 4 Ah for cell assessment was produced (Figures 1 and 5).

### (Repeated charging/discharging test)

The cell 1 prepared was allowed to stand for 8 hours after filling until the electrolyte had conditioned the electrode. It was then charged to 3.2 V at 0.1 C (400 mA), and allowed to stand for another 8 hours. Next, it was charged to 4.2 V at 0.2 C (800 mA) and charged at a constant voltage until the current value reached 40 mA by 4.2 V. After standing for another 8 hours in this state, it was discharged at a constant current to 2.7 V at 0.2 C. After measuring the discharge capacity, the top seal was cut away, the gas was removed, and the top was again sealed by heat sealing. The starting discharge capacity of the laminated cell 1 was 3.97 Ah.

Next, to evaluate the life of this cell, the cell 1 was charged for 3.5 h by a constant current-constant voltage of 4.2 V at 0.5 C and stored in this state in a 60°C constant temperature tank. After a certain period of time, the stored cell was removed from the constant temperature tank and the residual capacity at 0.2 C and, after charging at 0.5 C, the recovered discharge capacity at 0.2 C were assessed at 25°C. Such testing was conducted by varying the voltage during storage between 3.95 V and 4.1 V, and the graph of the changes in capacity shown in Figure 2 was obtained by a 60°C cycle test.

The test conditions in Figure 2 were as follows.
SOC 100% cycle test
Charging: Current value 1 C (4 A), 4.2 V, CC-CV (constant current-constant voltage)
3.5 hr cut
Discharging: Current value 1 C (4 A),
2.7 V cut

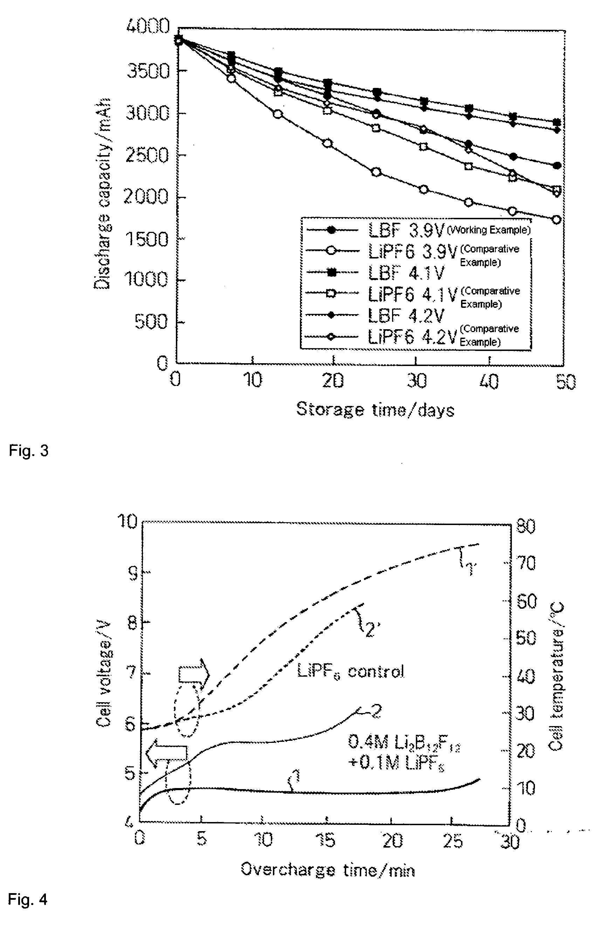

The graph of Figure 3 was also obtained by a 60°C storage test.

The test conditions in Figure 3 were as follows.
Storage voltage: 4.2, 4.1, 3.9 V

### Comparative Examples

Studies were conducted in the same way as in Working Example 1 except that the conditions were varied as shown in the graphs in Figures 2-4. The results obtained are shown in the graphs of Figures 2-4.

### (Effects of the dielectric constant of the solvent on 1,2-dimethoxy-4-bromobenzene as an overcharge protection additive)

US 5,763,119 disclosed the use of 1,2-dimethoxy-4-bromobenzene as an overcharge protection redox shuttle. 0.1 M 4-bromo-1,2-dimethoxybenzene was added to 1.0 M LiPF₆ in EC:DEC (3:7) (dielectric constant = 28) solution and 1.0 M LiPF₆ in PC solution (dielectric constant up to 65). A cyclic voltammetry test was conducted in an electrochemical cell that was the same as the one described in Examples 2-6. The scan speed was 20 mV/sec. The oxidation threshold potential in the solvents containing EC/DEC and PC was 4 and 18 V. The dielectric constant of the solvent had no effect on the oxidation threshold potential.

In the results, the cell was not overcharged up to a set voltage of 5.5 volt and a flat plateau was observed at about 4.6 volt due to oxidation of the overcharge protection salt when 0.2 M Li₂B₁₂F₁₂ in an LiPF₆ electrolyte was used. Through this cell design, the use of Li₂B₁₂F₁₂ salt in a lithium secondary cell having LiPF₆ salt gives overcharge protection, and a sufficient amount was present to create a redox shuttle during overcharge conditions.

The results obtained are shown in the graph of Figure 4. The test conditions in Figure 4 were as follows.
25°C Overcharge test
SOC Overcharge from 100% (4.2V)
Current value 1 C (4 A)

In the graph, curve 1 shows the voltage of Working Example 1.

Curve 1' shows the surface temperature of Working Example 1.

Curve 2 shows the voltage of the comparative example.

Curve 2' shows the surface temperature of the comparative example.

The invention also relates to the following numbered items:
1. A nonaqueous electrolyte characterized in containing a nonaqueous solvent, a lithium salt shown by the following formula (1)

   Li₂B₁₂H_{z}F₁₂₋ₓ (1)

   (where, x is an integer of from 0 to 3),
   at least one first additive selected from compounds shown by the following formula (2) 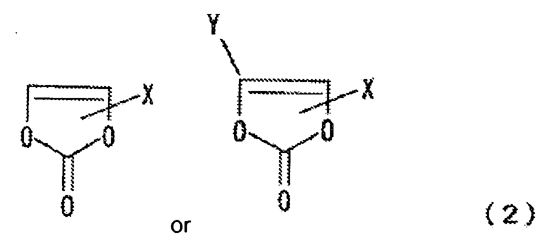 (where X and Y are independently H, CH₃, a vinyl group, or F) vinyl ethylene carbonate (VEC) and fluorinated ethylene carbonate; and
   at least one second additive among compounds shown by the following formula (3) 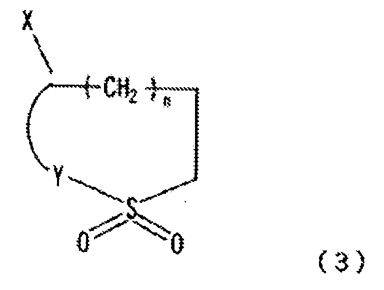 (where, Y is O, X is H or OH, and n is an integer of 0 to 5).
2. The nonaqueous electrolyte of item 1 wherein the above first additive is at least one additive selected from vinylene carbonate (VC), vinyl ethylene carbonate (VEC), dimethyl vinylene carbonate (DMVC), and fluorinated ethylene carbonate (FEC).
3. The nonaqueous electrolyte of items 1 or 2 wherein the above second additive is at least one additive selected from propane sultone (PS) and hydroxypropane sultone (HOPS).
4. The nonaqueous electrolyte of item 3 wherein the above first additive is VC and the second additive is propane sultone (PS).
5. The nonaqueous electrolyte of item 3 wherein the above first additive is FEC and the second additive is PS.
6. The nonaqueous electrolyte of item 3 wherein the above first additive is VC and VEC and the second additive is PS.
7. The nonaqueous electrolyte of item 3 wherein the above lithium salt is Li₂B₁₂F₁₂, the first additive is VC, and the second additive is PS.
8. The nonaqueous electrolyte of item 3 wherein the above lithium salt is Li₂B₁₂F₁₂, the first additive is VC, and the second additive is hydroxypropane sultone (HOPS).
9. The nonaqueous electrolyte of item 3 wherein the above lithium salt is Li₂B₁₂F₁₂, the first additive is VC and VEC, and the second additive is PS.
10. The nonaqueous electrolyte of item 3 wherein the above lithium salt is Li₂B₁₂F₁₂, the first additive is VC, and the second additive is PS and HOPS.
11. A lithium secondary cell comprising at least a cathode capable of absorbing and desorbing the above lithium salt, an anode capable of absorbing and desorbing lithium, a separator positioned between the above cathode and anode, and a nonaqueous electrolyte positioned between the above cathode and anode; the lithium secondary cell being characterized in that the above nonaqueous electrolyte is the nonaqueous electrolyte of item 1.
12. The lithium secondary cell of item 11 wherein the above nonaqueous electrolyte contains VC as the first additive and propane sultone (PS) as the second additive.
13. The lithium secondary cell of item 11 wherein the above nonaqueous electrolyte contains FEC as the first additive and PS as the second additive.
14. The lithium secondary cell of item 11 wherein the above nonaqueous electrolyte contains VC and VEC as the first additive and PS as the second additive.
15. The lithium secondary cell of item 11 wherein the above nonaqueous electrolyte contains Li₂B₁₂F₁₂ as the lithium salt, VC as the first additive, and PS as the second additive.
16. The lithium secondary cell of item 11 wherein the above nonaqueous electrolyte contains Li₂B₁₂F₁₂ as the lithium salt, VC as the first additive, and HOPS as the second additive.
17. The lithium secondary cell of item 11 wherein the above nonaqueous electrolyte contains Li₂B₁₂F₁₂ as the lithium salt, VC as the first additive, and PS and HOPS as the second additive.
18. A lithium cell power source comprising a plurality of lithium secondary cells connected in series or in parallel, the lithium cell power source being characterized in that the lithium secondary cells are lithium secondary cells of any of items 11 through 17.
19. The lithium secondary cell of item 11 wherein the above cathode contains a conductor of lithium metal, a carbonaceous material, tin and an alloy thereof, silicon and an alloy thereof, germanium and an alloy thereof.
20. The lithium secondary cell of item 19 wherein the above carbonaceous material is selected from amorphous carbon and graphite (natural or artificial).
21. The lithium secondary cell of items 19 or 20 wherein the above conductor is lithium titanate.
22. The lithium secondary cell of any of items 19 to 21 wherein the cathode contains a carbonaceous material.
23. The lithium secondary cell of item 22 wherein the above carbonaceous material is hard carbon or graphite.
24. The lithium secondary cell of item 23 wherein the above carbonaceous material is graphite.
25. The lithium secondary cell of item 11 wherein the above anode contains at least one of lithium iron phosphate, LiFePO₄, LiNi₁₋ₓCoₓO₂, and lithium-manganese spinel (spinel) LiMn₂O₄.
26. The lithium secondary cell of item 25 wherein the above anode contains lithium-manganese spinel (spinel) LiMn₂O₄.

## Claims

1. A nonaqueous electrolyte **characterized in** containing a nonaqueous solvent,
a lithium salt shown by the following formula (1)
Li₂B₁₂HₓF₁₂₋ₓ (1)
(where, x is an integer of from 0 to 3),
at least one first additive selected from compounds shown by the following formula (2) 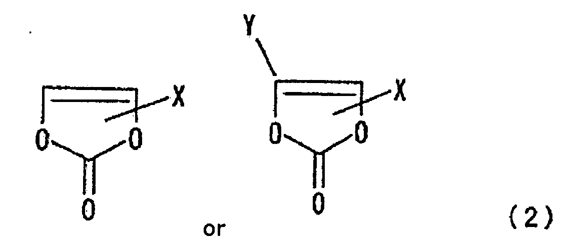 (where X and Y are independently H, CH₃, a vinyl group, or F), vinyl ethylene carbonate (VEC) and fluorinated ethylene carbonate (FEC); and
at least one second additive among compounds shown by the following formula (3) 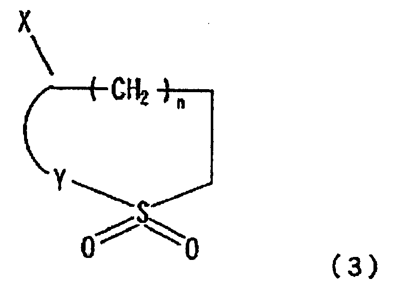 (where, Y is O, X is H or OH, and n is an integer of 0 to 5).

2. The nonaqueous electrolyte of Claim 1 wherein the above first additive is at least one additive selected from vinylene carbonate (VC), vinyl ethylene carbonate (VEC), dimethyl vinylene carbonate (DMVC), and fluorinated ethylene carbonate (FEC).

3. The nonaqueous electrolyte of Claims 1 or 2 wherein the above second additive is at least one additive selected from propane sultone (PS) and hydroxypropane sultone (HOPS).

4. The nonaqueous electrolyte of Claims 1 to 3 wherein the above first additive is VC and the second additive is propane sultone (PS), or wherein the above first additive is FEC and the second additive is PS, or wherein the above first additive is VC and VEC and the second additive is PS.

5. The nonaqueous electrolyte of Claims 1 to 4 wherein the above lithium salt is Li₂B₁₂F₁₂, the first additive is VC, and the second additive is PS, or wherein the above lithium salt is Li₂B₁₂F₁₂, the first additive is VC, and the second additive is hydroxypropane sultone (HOPS), or wherein the above lithium salt is Li₂B₁₂F₁₂, the first additive is VC and VEC, and the second additive is PS, or wherein the above lithium salt is Li₂B₁₂F₁₂, the first additive is VC, and the second additive is PS and HOPS.

6. A lithium secondary cell comprising at least a cathode capable of absorbing and desorbing the above lithium salt, an anode capable of absorbing and desorbing lithium, a separator positioned between the above cathode and anode, and a nonaqueous electrolyte positioned between the above cathode and anode; the lithium secondary cell being **characterized in that** the above nonaqueous electrolyte is the nonaqueous electrolyte of Claim 1.

7. The lithium secondary cell of Claim 6 wherein the above nonaqueous electrolyte contains VC as the first additive and propane sultone (PS) as the second additive, or wherein the above nonaqueous electrolyte contains FEC as the first additive and PS as the second additive, or wherein the above nonaqueous electrolyte contains VC and VEC as the first additive and PS as the second additive.

8. The lithium secondary cell of Claim 6 or 7 wherein the above nonaqueous electrolyte contains Li₂B₁₂F₁₂ as the lithium salt, VC as the first additive, and PS as the second additive, or wherein the above nonaqueous electrolyte contains Li₂B₁₂F₁₂ as the lithium salt, VC as the first additive, and HOPS as the second additive, or wherein the above nonaqueous electrolyte contains Li₂B₁₂F₁₂ as the lithium salt, VC as the first additive, and PS and HOPS as the second additive.

9. The lithium secondary cell of Claims 6 to 8 wherein the above cathode contains a conductor of lithium metal, a carbonaceous material, tin and an alloy thereof, silicon and an alloy thereof, germanium and an alloy thereof.

10. The lithium secondary cell of Claim 9 wherein the above carbonaceous material is selected from amorphous carbon and graphite (natural or artificial).

11. The lithium secondary cell of Claims 9 or 10 wherein the above conductor is lithium titanate.

12. The lithium secondary cell of any of Claims 9 to 11 wherein the cathode contains a carbonaceous material, preferably wherein the above carbonaceous material is hard carbon or graphite, especially preferably wherein the above carbonaceous material is graphite.

13. The lithium secondary cell of Claims 6 to 12 wherein the above anode contains at least one of lithium iron phosphate, LiFePO₄, LiNi₁₋ₓCoₓO₂, and lithium-manganese spinel (spinel) LiMn₂O₄.

14. The lithium secondary cell of Claim 13 wherein the above anode contains lithium-manganese spinel (spinel) LiMn₂O₄.

15. A lithium cell power source comprising a plurality of lithium secondary cells connected in series or in parallel, the lithium cell power source being **characterized in that** the lithium secondary cells are lithium secondary cells of any of Claims 6 through 14.

## Patentansprüche

1. Nicht-wässriger Elekrolyt, **dadurch gekennzeichnet, dass** er ein nicht-wässriges Lösungsmittel erhält,
ein Lithiumsalz, welches durch die folgende Formel (1) gezeigt wird
Li₂B₁₂HₓF₁₂₋ₓ (1)
(wobei x eine ganze Zahl von 0 bis 3 ist),
mindestens ein erstes Additiv, welches aus Verbindungen, die durch die folgende Formel (2) gezeigt werden 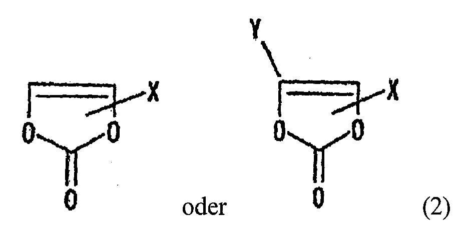 (wobei X und Y unabhängig voneinander H, CH₃, eine Vinylgruppe oder F sind), Vinylethylencarbonat (VEC) und fluoriertem Ethylencarbonat (FEC) ausgewählt ist; und
mindestens ein zweites Additiv unter Verbindungen, welche durch die folgende Formel (3) gezeigt werden 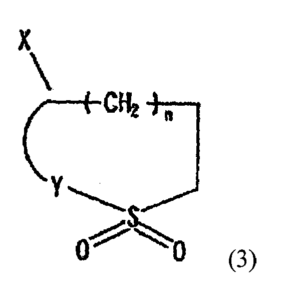 (wobei Y für O steht, X für H oder OH steht und n eine ganze Zahl von 0 bis 5 ist).

2. Nicht-wässriger Elektrolyt nach Anspruch 1, wobei das vorstehende erste Additiv mindestens ein Additiv ist, welches aus Vinylencarbonat (VC), Vinylethylencarbonat (VEC), Dimethylvinylencarbonat (DMVC) und fluoriertem Ethylencarbonat (FEC) ausgewählt ist.

3. Nicht-wässriger Elektrolyt nach den Ansprüchen 1 oder 2, wobei das vorstehende zweite Additiv mindestens ein Additiv ist, welches aus Propansulton (PS) und Hydroxypropansulton (HOPS) ausgewählt ist.

4. Nicht-wässriger Elektrolyt nach den Ansprüchen 1 bis 3, wobei das vorstehende erste Additiv VC ist und das zweite Additiv Propansulton (PS) ist, oder wobei das vorstehende erste Additiv FEC ist und das zweite Additiv PS ist, oder wobei das vorstehende erste Additiv VC und VEC ist und das zweite Additiv PS ist.

5. Nicht-wässriger Elektrolyt nach den Ansprüchen 1 bis 4, wobei das vorstehende Lithiumsalz Li₂B₁₂F₁₂ ist, das erste Additiv VC ist und das zweite Additiv PS ist, oder wobei das vorstehende Lithiumsalz Li₂B₁₂F₁₂ ist, das erste Additiv VC ist und das zweite Additiv Hydroxypropansulton (HOPS) ist, oder wobei das vorstehende Lithiumsalz Li₂B₁₂F₁₂ ist, das erste Additiv VC und VEC ist und das zweite Additiv PS ist, oder wobei das vorstehende Lithiumsalz Li₂B₁₂F₁₂ ist, das erste Additiv VC ist und das zweite Additiv PS und HOPS ist.

6. Sekundäre Lithiumzelle, umfassend mindestens eine Kathode, welche zum Absorbieren und Desorbieren des vorstehenden Lithiumsalzes in der Lage ist, eine Anode, welche zum Absorbieren und Desorbieren von Lithium in der Lage ist, eine Trennvorrichtung, positioniert zwischen der vorstehenden Kathode und Anode, und einen nicht-wässrigen Elektrolyten, positioniert zwischen der obigen Kathode und Anode; wobei die sekundäre Lithiumzelle **dadurch gekennzeichnet ist, dass** der obige nicht-wässrige Elektrolyt der nicht-wässrige Elektrolyt nach Anspruch 1 ist.

7. Sekundäre Lithiumzelle nach Anspruch 6, wobei der obige nicht-wässrige Elektrolyt VC als das erste Additiv und Propansulton (PS) als das zweite Additiv enthält, oder wobei der obige nicht-wässrige Elektrolyt FEC als das erste Additiv und PS als das das zweite Additiv enthält, oder wobei der vorstehende nicht-wässrige Elektrolyt VC und VEC als das erste Additiv und PS als das zweite Additiv enthält.

8. Sekundäre Lithiumzelle nach Anspruch 6 oder 7, wobei der vorstehende nicht-wässrige Elektrolyt Li₂B₁₂F₁₂ als das Lithiumsalz, VC als das erste Additiv und PS als das zweite Additiv enthält, oder wobei der obige nicht-wässrige Elektrolyt Li₂B₁₂F₁₂ als das Lithiumsalz, VC als das erste Additiv und HOPS als das zweite Additiv enthält, oder wobei der obige nicht-wässrige Elektrolyt Li₂B₁₂F₁₂ als das Lithiumsalz, VC als das erste Additiv und PS und HOPS als das zweite Additiv enthält.

9. Sekundäre Lithiumzelle nach den Ansprüchen 6 bis 8, wobei die vorstehende Kathode einen Leiter von Lithiummetall, ein kohlenstoffhaltiges Material, Zinn und eine Legierung davon, Silicium und eine Legierung davon, Germanium und eine Legierung davon enthält.

10. Sekundäre Lithiumzelle nach Anspruch 9, wobei das vorstehende kohlenstoffhaltige Material aus amorphem Kohlenstoff und Graphit (natürlich oder künstlich) ausgewählt ist.

11. Sekundäre Lithiumzelle nach den Ansprüchen 9 oder 10, wobei der obige Leiter Lithiumtitanat ist.

12. Sekundäre Lithiumzelle nach einem der Ansprüche 9 bis 11, wobei die Kathode ein kohlenstoffhaltiges Material enthält, wobei das obige kohlenstoffhaltige Material bevorzugt harter Kohlenstoff oder Graphit ist, wobei das obige kohlenstoffhaltige Material besonders bevorzugt Graphit ist.

13. Sekundäre Lithiumzelle nach den Ansprüchen 6 bis 12, wobei die vorstehende Anode mindestens eines von Lithiumeisenphosphat, LiFePO₄, LiNi₁₋ₓCoₓO₂ und Lithiummanganspinell (Spinell) LiMn₂O₄ enthält.

14. Sekundäre Lithiumzelle nach Anspruch 13, wobei die vorstehende Anode Lithiummanganspinell (Spinell) LiMn₂O₄ enthält.

15. Lithiumzellen-Stromquelle, umfassend eine Vielzahl von sekundären Lithiumzellen, welche in Reihe oder parallel geschaltet sind, wobei die Lithiumzellen-Stromquelle **dadurch gekennzeichnet ist, dass** die sekundären Lithiumzellen sekundäre Lithiumzellen nach einem der Ansprüche 6 bis 14 sind.

## Revendications

1. Electrolyte non aqueux **caractérisé en ce qu'**il contient un solvant non aqueux,
un sel de lithium montré par la formule suivante (1)
Li₂B₁₂HₓF₁₂₋ₓ (1)
(où x est un entier de 0 à 3),
au moins un premier additif sélectionné parmi les composés montrés par les formules suivantes (2) 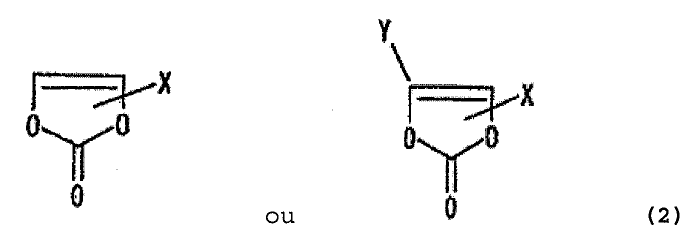 (où X et Y sont indépendamment H, CH₃, un groupement vinyle ou F), carbonate de vinyléthylène (VEC) et carbonate d'éthylène fluoré (FEC) ; et
au moins un second additif sélectionné parmi les composés montrés par la formule suivante (3) 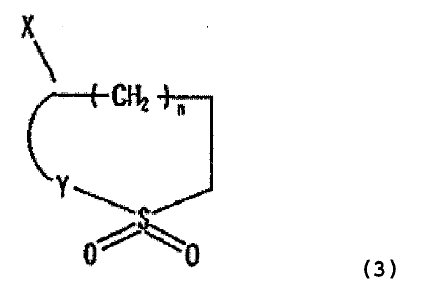 (où Y est O, X est H ou OH, et n est un entier de 0 à 5).

2. Electrolyte non aqueux selon la revendication 1, dans lequel le premier additif ci-dessus est au moins un additif sélectionné parmi le carbonate de vinylène (VC), le carbonate de vinyléthylène (VEC), le carbonate de diméthylvinylène (DMVC) et le carbonate d'éthylène fluoré (FEC).

3. Electrolyte non aqueux selon les revendications 1 ou 2 dans lequel le second additif ci-dessus est au moins un additif sélectionné parmi la propane sultone (PS) et l'hydroxypropane sultone (HOPS).

4. Electrolyte non aqueux selon les revendications 1 à 3 dans lequel le premier additif ci-dessus est le VC et le second additif est la propane sultone (PS), ou dans lequel le premier additif ci-dessus est le FEC et le second additif est la PS, ou dans lequel le premier additif ci-dessus est le VC et le VEC et le second additif est la PS.

5. Electrolyte non aqueux selon les revendications 1 à 4 dans lequel le sel de lithium ci-dessus est le Li₂B₁₂F₁₂, le premier additif est le VC, et le second additif est la PS, ou dans lequel le sel de lithium ci-dessus est le Li₂B₁₂F₁₂, le premier additif est le VC, et le second additif est l'hydroxypropane sultone (HOPS), ou dans lequel le sel de lithium ci-dessus est le Li₂B₁₂F₁₂, le premier additif est le VC et le VEC, et le second additif est la PS, ou dans lequel le sel de lithium ci-dessus est le Li₂B₁₂F₁₂, le premier additif est le VC, et le second additif est la PS et l'HOPS.

6. Pile secondaire au lithium comprenant au moins une cathode capable d'absorber et de désorber le sel de lithium ci-dessus, une anode capable d'absorber et de désorber le lithium, un séparateur positionné entre la cathode et l'anode ci-dessus, et un électrolyte non aqueux positionné entre la cathode et l'anode ci-dessus; la pile secondaire au lithium étant **caractérisée en ce que** l'électrolyte non aqueux ci-dessus est l'électrolyte non aqueux selon la revendication 1.

7. Pile secondaire au lithium selon la revendication 6 dans laquelle l'électrolyte non aqueux ci-dessus contient du VC comme premier additif et de la propane sultone (PS) comme second additif, ou dans laquelle l'électrolyte non aqueux ci-dessus contient du FEC comme premier additif et de la PS comme second additif, ou dans laquelle l'électrolyte non aqueux ci-dessus contient du VC et du VEC comme premier additif et de la PS comme second additif.

8. Pile secondaire au lithium selon la revendication 6 ou 7 dans lequel l'électrolyte non aqueux ci-dessus contient du Li₂B₁₂F₁₂ comme sel de lithium, du VC comme premier additif, et de la PS comme second additif, ou dans lequel l'électrolyte non aqueux ci-dessus contient du Li₂B₁₂F₁₂ comme sel de lithium, du VC comme premier additif, et de l'HOPS comme second additif, ou dans lequel l'électrolyte non aqueux ci-dessus contient du Li₂B₁₂F₁₂ comme sel de lithium, du VC comme premier additif, et de la PS et de l'HOPS comme second additif.

9. Pile secondaire au lithium selon les revendications 6 à 8 dans laquelle la cathode ci-dessus contient un conducteur de métal de lithium, un matériau carboné, de l'étain et un alliage de celui-ci, du silicium et un alliage de celui-ci, du germanium et un alliage de celui-ci.

10. Pile secondaire au lithium selon la revendication 9 dans laquelle le matériau carboné ci-dessus est sélectionné parmi le carbone amorphe et le graphite (naturel ou artificiel).

11. Pile secondaire au lithium selon les revendications 9 ou 10 dans laquelle le conducteur ci-dessus est du titanate de lithium.

12. Pile secondaire au lithium selon l'une quelconque des revendications 9 à 11 dans laquelle la cathode contient un matériau carboné, de préférence dans laquelle le matériau carboné ci-dessus est du carbone dur ou du graphite, en particulier préféré dans laquelle le matériau carboné ci-dessus est le graphite.

13. Pile secondaire au lithium selon les revendications 6 à 12 dans laquelle l'anode ci-dessus contient au moins un parmi le phosphate de fer lithium, LiFePO₄, LiNi₁₋ₓCoₓO₂, et le spinelle de lithium-manganèse (spinelle) LiMn₂O₄.

14. Pile secondaire au lithium selon la revendication 13 dans laquelle l'anode ci-dessus contient du spinelle de lithium-manganèse (spinelle) LiMn₂O₄.

15. Bloc d'alimentation de pile au lithium comprenant une pluralité de piles secondaires au lithium connectées en série ou en parallèle, le bloc d'alimentation de pile au lithium étant **caractérisé en ce que** les piles secondaires au lithium sont les piles secondaires au lithium selon l'une quelconque des revendications 6 à 14.
